# EUROPÄISCHE PATENTANMELDUNG

(11) **EP 1 447 368 A1**
(43) Veröffentlichungstag der Anmeldung: **18.08.2004**
(21) Anmeldenummer: 04000582.9
(22) Anmeldetag: 14.01.2004
(51) Int. Cl.: B66B 1/34

(54) **Positioniererfassungssystem**

(30) Priorität: 12.02.2003 DE 20302273 U
(71) Anmelder: Bernstein AG, 32457 Porta Westfalica (DE)
(72) Erfinder: Tausch, Wolfgang, Dipl.-Ing., 32547 Bad Oeynhausen (DE); Wedemeyer, Torsten, Dipl.-Ing., 32457 Porta Westfalica (DE)
(74) Vertreter: Dantz, Jan Henning

(57) **Zusammenfassung**

Ein Positionserfassungssystem, insbesondere für Aufzüge, umfasst mindestens einen Sensor, der relativ zu einem Signalgeber für den Sensor bewegbar ist. Erfindungsgemäß ist dabei als Signalgeber ein Maßstab vorgesehen, an dem eine durch den Sensor erfassbare Kodierung (11-15, 19) aufgebracht ist, mittels der die Position des Sensors relativ zu dem Maßstab erfassbar ist. Dadurch kann die absolute Höhe einer Kabine eines Aufzuges erfasst werden, so dass je nach Kodierung eine hohe Genauigkeit erreicht wird. Das Positionserfassungssystem kann ferner für eine automatisierte Inbetriebnahme verwendet werden, und die ermittelten Daten können sowohl für die Steuerungstechnik als auch für Sicherheitsanforderungen genutzt werden.

## Beschreibung

Die vorliegende Erfindung betrifft ein Positionserfassungssystem, insbesondere für Aufzüge, mit mindestens einem Sensor, der relativ zu einem Signalgeber für den Sensor bewegbar ist.

Solche Positionserfassungssysteme können insbesondere für Personen- und Lastaufzüge für eine Steuerung eingesetzt werden.

Es gibt bereits Positionserfassungssysteme für Aufzüge, bei denen Inkrementalgeber, Magnetschalter, mechanische Positionsschalter oder auch ein Ultraschallsystem eingesetzt werden. Dabei gibt es meist zwei getrennte Systeme für die Steuerungstechnik und die Sicherheitseinrichtungen. Gerade im Stockwerksbereich gibt es meist eine zu geringe Mess-Auflösung, was den Komfort verringert. Inkrementale Systeme verlieren bei einem Reset die Positionsinformationen und müssen daher neu geeicht werden, was relativ aufwendig ist. Bei kraft-, formschlüssigen und kontaktbehafteten Lösungen ergibt sich das Problem, dass die Lebensdauer meist gering ist und Ausfallprobleme bestehen. Sollte einmal ein Problem auftreten, ist die Diagnose zur Fehlerbehebung meist schwierig, was zu langen Stillstandszeiten führt. Die bekannten Systeme besitzen einen relativ hohen Wartungsaufwand und erfordern eine aufwendige manuelle Justage vor Ort. Hinzu erfordern eine aufwendige manuelle Justage vor Ort. Hinzu kommen Probleme, falls viele Komponenten im Schacht verteilt sind, was eine aufwendige Verkabelung erfordert.

Es ist daher Aufgabe der vorliegenden Erfindung, ein Positionserfassungssystem, insbesondere für Aufzüge zu schaffen, das bei hoher Genauigkeit und einfachem Aufbau eine sichere Positionserfassung ermöglicht.

Diese Aufgabe wird mit einem Positionserfassungssystem mit den Merkmalen des Anspruches 1 gelöst.

Wenn als Signalgeber ein Maßstab vorgesehen ist, an dem eine durch den Sensor erfassbare Kodierung aufgebracht ist, mittels der die Position des Sensors relativ zu dem Maßstab erfassbar ist, kann die absolute Höhe einer Kabine eines Aufzuges erfasst werden, so dass je nach Kodierung eine hohe Genauigkeit erreicht werden kann. Das Positionserfassungssystem kann für eine automatisierte Inbetriebnahme verwendet werden, und die ermittelten Daten können sowohl für die Steuerungstechnik als auch für Sicherheitsanforderungen genutzt werden. Neben der Verwendung für die Regelung und die Sicherheit eines Aufzuges kann das Positionserfassungssystem auch für die Selbstüberwachung und für Diagnosemöglichkeiten bei auftretenden Fehlern verwendet werden.

Gemäß einer bevorzugten Ausführungsform der Erfindung erfolgt die Erfassung der Positionen durch den Sensor berührungslos, so dass der Verschleiss minimiert wird. Vorzugsweise weist der Maßstab mit der Kodierung mehrere magnetische Felder auf, die von Sensoren gelesen werden können. Es ist aber möglich, optische, induktive, kapazitive oder hochfrequente Systeme zur Positionserfassung einzusetzen. Bei magnetischen Systemen werden vorzugsweise permanent- oder elektromagnetische, magneto-resistive Elemente, Halleffekte oder Reedkontakte eingesetzt.

Vorzugsweise weist der Maßstab mindestens zwei unterschiedliche benachbart zueinander angeordnete Kodierungen auf. Die eine Kodierung mit größerem Maßstab kann rein für Sicherheitszwecke und die Kodierung mit dem geringen Maßstab für Steuerung verwendet werden. Es ist auch möglich, eine redundante Positionserfassung durch mehrere Kodierungen vorzunehmen. Dann ist vorzugsweise auch eine Vergleichseinheit vorgesehen, die von zwei Sensoren erfasste Positions- und/oder Geschwindigkeitsdaten vergleicht, um eine erhöhte Sicherheit zu erreichen.

Die Erfindung wird nachfolgend anhand mehrerer Ausführungsbeispiele mit Bezug auf die beigefügten Zeichnungen näher erläutert:
- Fig. 1: eine schematische Darstellung eines Aufzuges, an dem ein erfindungsgemäßes Positionserfassungssystem montierbar ist;
- Fig. 2: mehrere Ausführungsbeispiele für Kodierungen;
- Fig. 3: ein Ausführungsbeispiel für eine Kombination von Kodierungen, und
- Fig. 4: mehrere Ausführungsbeispiele für weitere Kodierungen.

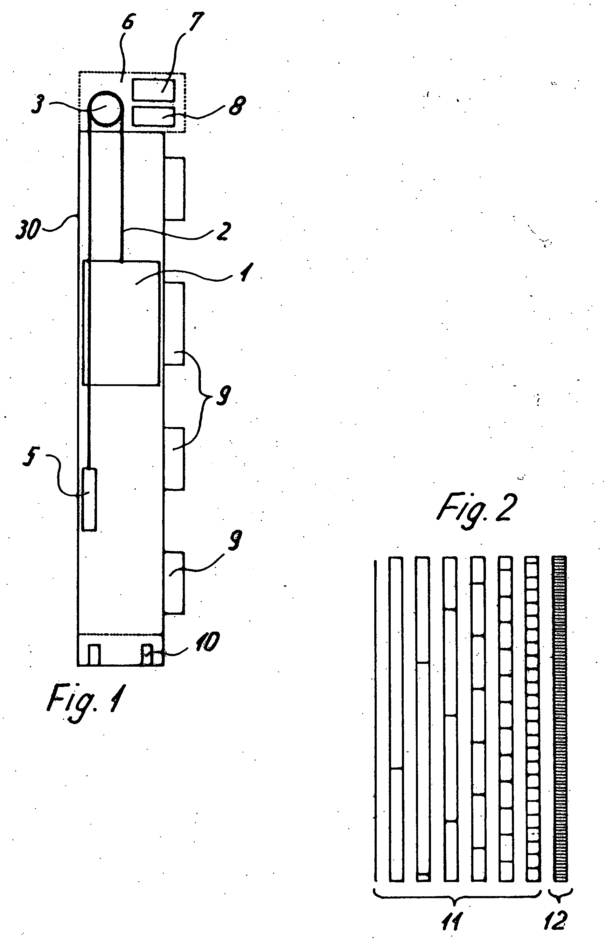

Bei der in Fig. 1 dargestellten Aufzugsanlage ist eine Kabine 1 in einem Schacht geführt und über einen Riemen 2 oder Drahtseile bewegbar. Der Riemen 2 ist um eine angetriebene Umlenkrolle 3 geführt und auf der gegenüberliegenden Seite ist ein Gegengewicht 5 angeordnet. Im oberen Bereich des Aufzugsschachtes ist ein Maschinenraum 6 mit einer Steuerung 7 und erforderlicher Sicherheitsausrüstung 8 vorgesehen.

An einer Vorderseite des Aufzugsschachtes sind mehrere Türen 9 in unterschiedlicher Höhe angeordnet, die von der Kabine 1 angefahren werden. Bodenseitig sind Puffer 10 zur Sicherheit montiert. Rückseitig ist eine Wand 30 vorgesehen, die zur Positionserfassung für die Kabine 1 verwendet werden kann.

An der Rückwand 30 ist ein Maßstab im Schacht benachbart zu der Kabine 1 angeordnet. Der Maßstab weist eine Kodierung auf, die mittels eines mit der Kabine verbundenen Sensors lesbar ist, so dass eine berührungslose Ablesung der Position der Kabine 1 möglich ist. Durch das Lesen der Kodierung ist ferner die Ermittlung der Geschwindigkeit der Kabine 1 möglich. Die durch den Sensor erfassten Daten werden an die Steuerung für den Antrieb und an die Sicherheitsausrüstung 8 weitergeleitet. Bei dem dargestellten Ausführungsbeispiel ist der Maßstab im Schacht und der Sensor mit der Kabine verbunden. Es ist natürlich auch möglich, ein oder mehrere Sensoren im Schacht und den Maßstab an der Kabine anzuordnen.

Der Maßstab kann eine vertikal angeordnete Leiste, ein Stab oder ein Band sein, auf dem abwechselnd Magneten mit unterschiedlicher Polung (Nord und Süd) angeordnet sind. Durch die unterschiedliche Polung ist eine Kennzeichnung aufgebracht, die von entsprechenden magnetischen Sensoren gelesen werden kann. Die Position auf dem Maßstab bzw. dem Band ist durch den Wechsel des Magnetfeldes kodiert. Die Sensoren sind in ausreichender Anzahl an der Kabine angeordnet und ermöglichen eine berührungslose Erfassung der magnetischen Daten. Es wäre auch denkbar, den Maßstab bzw. die Sensoren mit den bewegbaren Riemen zu verbinden.

In Fig. 2 sind Beispiele für eine Kodierung des Maßstabes dargestellt. Auf dem Maßstab ist mindestens eine absolut kodierte Skala 11 und eine inkrementale Skala 12 aufgebracht. Die absolute Position wird so verarbeitet, dass sie für Sicherheitsfunktionen verwendet werden kann. Aus der inkrementalen Skala kann eine Geschwindigkeits- und Fahrtrichtungsinformation gewonnen werden, ebenso für Komfort-Zwecke eine Positionsinformation, die eine erhöhte Genauigkeit aufweist. Die absolut kodierte Skala 11 kann eine beliebige Kodierung, speziell jedoch eine lineare, eine Gray- oder eine "Pseudo-Random"-Kodierung erhalten.

Von besonderem Vorteil ist es, wenn beide Skalen nicht die gleiche Auflösung besitzen. So ist es denkbar, dass für Sicherheitszwecke eine Auflösung von beispielsweise 20 cm ausreichend ist. Ein Aufzug mit einem kurzzeitigen Positionsfehler von < 20 cm wäre demnach nicht unsicher. Für Komfort-Zwecke wird vielfach eine höhere Genauigkeit, beispielsweise 1 mm gefordert. Dafür ist der inkrementale Maßstab einsetzbar. Weiterhin hat dieser auch sicherheitsrelevante Bedeutung: Die Geschwindigkeit kann in kleineren Intervallen bzw. mit höherer Auflösung gemessen werden.

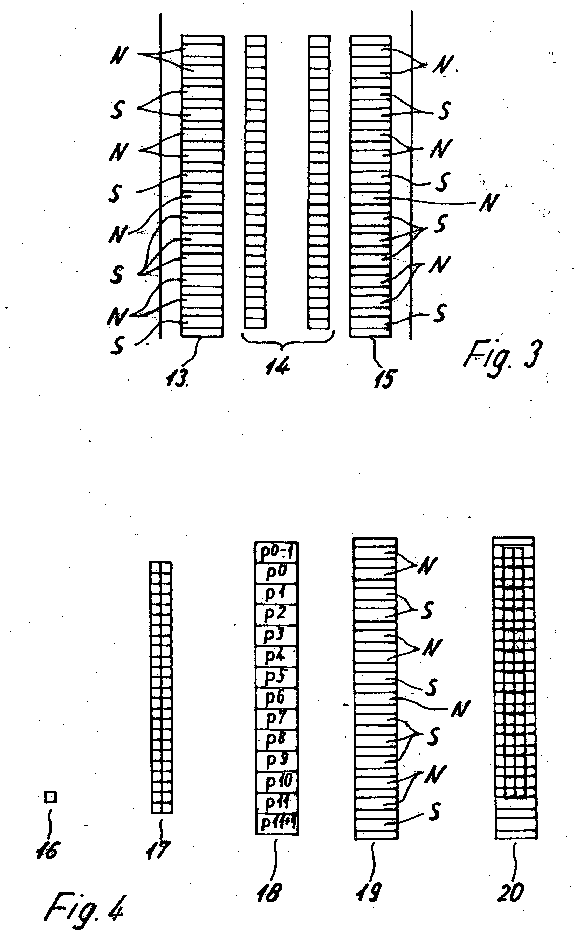

In Fig. 3 ist ein Beispiel für eine "Pseudo-Random"-Kodierung gezeigt.

Bei Verwendung dieser Kodierung sind die Nord- und Südpole linear so hintereinander angeordnet, dass ein längs der Fahrtrichtung verlaufendes Bit-Muster entsteht. Wird ein Abschnitt einer gewissen Länge aus diesem Bit-Muster betrachtet, kommt dieses Bit-Muster auf der gesamten Länge nicht wieder vor.

Die maximale Länge des Maßstabes und die geforderte Positioniergenauigkeit ergeben die zu betrachtende Länge des Abschnitts. Links ist ein absoluter Längenmaßstab dargestellt, bei dem die Magnetflächen jeweils mit N=Nord und S=Süd gekennzeichnet sind. In der Mitte sind redundante inkrementale Maßstäbe angeordnet, während rechts ein weiterer redundanter Absolutmaßstab mit magnetischen Feldern angeordnet ist.

Als Beispiel für die Kodierung werden folgende Werte angenommen:

| | |
|---|---|
| Schachthöhe h | 100 m |
| Gewünschte Auflösung a | 12 bit |
| Resultierende Stufenzahl | Z = 2¹² = 4.096 |
| Länge eines magnetischen Bits b | b = h : Z = 24,4 mm |
| Physikalische Länge des Kode-Abschnittes I | I = b x a = 293 mm |

Bei einer Auflösung von 12 bit ergibt sich bei der Länge eine Informationseinheit von 24,4 mm, so dass der Maßstab auf einer Länge von fast 30 cm gelesen werden muss. Auf dieser Länge befinden sich 12 binäre magnetische Informationseinheiten (Bits) in Form eines Nord- bzw. eines Südpols.

Kennzeichen des "Pseudo-Random"-Kodes ist, dass jedes Stück > 12 bit aus der linearen Bitfolge höchstens ein Mal auf der Länge des Aufzugsschachtes vorkommt. Verschiebt man das Betrachtungsfenster um die Länge b (1 bit), ergibt sich wieder eine auf der Aufzugslänge einmalige Bitkombination.

In Fig. 4 sind weitere mögliche Kodierungen gezeigt. Die Sensoren können Signale durch Bewegung über die magnetischen Felder erfassen, wobei beispielsweise ein einzelnes Hall-Element 16 vorgesehen sein kann. Stattdessen ist es auch möglich, mehrere Hall-Elemente in einer Anordnung 17 zu kombinieren, damit diese eine 12 bit-Länge des Maßstabes lesen.

Mit 18 ist schematisch die Längenteilung auf dem Magnetband des Maßstabes dargestellt.

Ein Maßstab 19 mit aufgebrachter magnetischer Kodierung kann durch ein Hall-Element 16 bzw. eine Anordnung 17 von Hall-Elementen gelesen werden, wie dies bei der Darstellung mit dem Bezugszeichen 20 schematisch dargestellt ist. Dort liest die Anordnung 17 von Hall-Elementen die magnetische Kodierung und erzeugt somit eine Momentaufnahme.

Die Anordnung von Sensoren bewegt sich relativ zu dem Maßstab. Zur Auswertung benötigt man eine Momentaufnahme von I aufeinanderfolgenden Bits, um die genaue Stelle auf der Skala bestimmen zu können. In einer Tabelle kann dieser BitWert eindeutig mit einer physikalischen Länge, beispielsweise 23, 8 m über der Schachtgrube, verknüpft werden. Es können mehrere Sensoren so angeordnet werden, dass sich, bei entsprechender Auswertung, das Leseergebnis bei Flussrichtungswechsel verbessert.

Da alle möglichen Bit-Kombinationen erlaubt sind, würde ein einzelner Bit-Fehler zu einer falschen Absolut-Position führen. Bei zwei-kanaliger Auswertung würde eine Abweichung der beiden Kanäle erkannt, der Aufzug müsste danach stillgesetzt werden. Mit zusätzlichen Maßnahmen innerhalb eines Kanals kann dieser Kanal für sich einen Bit-Fehler zumindest erkennen, gegebenenfalls sogar korrigieren und die Verfügbarkeit des Systems steigern. Denkbare Maßnahmen sind hierbei:
- Redundante Abtastung durch versetzte Sensor-Elemente
- Vergleich der absoluten Position mit inkrementalem Maßstab
- Plausibilitätsprüfung mit der vorherigen Position
- gleichzeitiges Lesen benachbarter Positionen (höhere Auflösung erforderlich).

Ein weiterer Vorteil des erfindungsgemäßen Positionserfassungssystems liegt in der sicheren Positionsbestimmung, die auch die Inbetriebnahme eines Aufzuges vereinfacht. Statt einer manuellen Justage, wie dies im Stand der Technik üblich ist, kann durch eine Referenzfahrt eine Einstellung erfolgen. Bei einer Fahrt mit Inspektionssteuerung in einer speziellen Betriebsart kann dann eine entsprechende Position angefahren werden, und durch eine Eingabe des Inbetriebnehmers der Steuerung gemeldet und dort als Referenzwert sicher abgespeichert werden. Dies kann sich für alle Positionen wiederholen.

Die Eingabe kann direkt an der Steuerung bzw. der Sicherheitseinrichtung erfolgen, vorzugsweise aber von der Kabine aus. Dazu bietet sich die sichere Schnittstelle zwischen Positionssensor und Steuerung bzw. Sicherheitseinrichtung an.

Das Eingabegerät kann in die Inspektionssteuerung integriert sein oder separat ausgeführt werden. Eine mögliche Ausführung ist die Integration von Inspektionssteuerung und Positionseingabegerät in ein gemeinsames Bedienungsterminal mit Eingabemöglichkeiten und Anzeigen, speziell in ein Handbedienterminal mit Zustimmungsschalter, wie es beispielsweise aus der industriellen Roboter- und Antriebstechnik bekannt ist.

Das System zeichnet sich ferner dadurch aus, dass eine Vielzahl von Daten zur Verfügung stehen, die zum sicheren und komfortablen Betrieb des Aufzugs beitragen. Dazu ist eine Datenschnittstelle nützlich, die die Übertragung von sicheren und nicht-sicheren Daten zu anderen Steuerungs- und Sicherheitseinrichtungen erlaubt. Vorzugsweise weist diese Schnittstelle folgende Eigenschaften auf:
- die gesamte Ausdehnung einer Aufzugsanlage kann überbrückt werden
- die Datenübertragung erfüllt die geforderten Sicherheitsstandards
- die Anzahl der Leitungen ist gering (beispielsweise Zeitmultiplex)
- die Echtzeitfähigkeit des Systems bleibt erhalten.

Werden diese Anforderungen erfüllt, kann der Sensor beweglich an der Kabine montiert sein und mit seinen Daten sowohl sicherheitsrelevante als auch Komfortfunktionen unterstützen.

## Patentansprüche

1. Positionserfassungssystem, insbesondere für Aufzüge, mit mindestens einem Sensor, der relativ zu einem Signalgeber für den Sensor bewegbar ist, **dadurch gekennzeichnet, dass** als Signalgeber ein Maßstab vorgesehen ist, an dem eine durch den Sensor erfassbare Kodierung (11-15, 19) aufgebracht ist, mittels der die Position des Sensors relativ zu dem Maßstab erfassbar ist.

2. Positionserfassungssystem nach Anspruch 1, **dadurch gekennzeichnet, dass** die Erfassung der Position durch den Sensor berührungslos erfolgt.

3. Positionserfassungssystem nach Anspruch 1 oder 2, **dadurch gekennzeichnet, dass** der Maßstab mehrere magnetische Felder aufweist.

4. Positionserfassungssystem nach einem der Ansprüche 1 bis 3, **dadurch gekennzeichnet, dass** der Maßstab mindestens zwei unterschiedliche benachbart zueinander angeordnete Kodierungen (11-15, 19) aufweist.

5. Positionserfassungssystem nach einem der Ansprüche 1 bis 4, **dadurch gekennzeichnet, dass** mehrere Sensoren vorgesehen sind, mittels denen eine redundante Abtastung einer oder mehrerer Kodierungen (11-15, 19) möglich ist.

6. Positionserfassungssystem nach einem der Ansprüche 1 bis 5, **dadurch gekennzeichnet, dass** eine Vergleichseinheit vorgesehen ist, die von zwei Sensoren erfasste Positions- und/oder Geschwindigkeitswerte vergleicht.

7. Positionserfassungssystem nach einem der Ansprüche 1 bis 6, **dadurch gekennzeichnet, dass** eine Kodierung (11-15, 19) einen Maßstab von bis zu 2 mm aufweist.
